(19) Europäisches Patentamt
European Patent Office
Office européen des brevets

(11) **EP 1 826 319 B1**

(12) **FASCICULE DE BREVET EUROPEEN**

(45) Date de publication et mention
de la délivrance du brevet:
**27.10.2010 Bulletin 2010/43**

(51) Int Cl.:
***E01B 29/32*** *(2006.01)*

(21) Numéro de dépôt: **07290191.1**

(22) Date de dépôt: **15.02.2007**

(54) **Procédé et système d'insertion d'éléments dans le sol, support d'enregistrement d'informations pour ce procédé**

Verfahren und System zum Einführen von Elementen auf dem Boden, Auskunftaufzeichnungsmedium für dieses Verfahren

Verfahren und System zum Einführen von Elementen auf dem Boden, Auskunftaufzeichnungsmedium für dieses Verfahren

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.02.2006 FR 0601595**

(43) Date de publication de la demande:
**29.08.2007 Bulletin 2007/35**

(73) Titulaire: **ALSTOM Transport SA
92300 Levallois-Perret (FR)**

(72) Inventeurs:
• **Milesi, Nicolas
75020 Paris (FR)**
• **Robertson, Ian
78570 Andresy (FR)**

(74) Mandataire: **Domenego, Bertrand et al
Cabinet Lavoix
2, place d'Estienne d'Orves
75441 Paris Cedex 09 (FR)**

(56) Documents cités:
**EP-A1- 1 178 153    EP-B1- 0 803 609**

**Description**

La présente invention concerne un procédé et un système d'insertion d'éléments dans le sol, et un support d'enregistrement d'informations pour ce procédé.

Il existe des procédés d'insertion d'un élément précédent $\underline{i}$ - 1 puis d'un élément suivant $\underline{i}$ dans le sol le long d'une trajectoire théorique pour la réalisation d'un ouvrage à l'aide d'un bras d'insertion guidé en déplacement. Ces procédés existants comportent :

- une étape d'établissement de positions nominales auxquelles les éléments doivent être insérés dans le sol en fonction de la trajectoire théorique,
- une étape de guidage automatique du bras d'insertion vers une position cible à laquelle doit être inséré l'élément suivant en fonction de la position nominale établie pour l'élément suivant et de relevés topographiques.

Par exemple, ces procédés sont utilisés pour insérer des selles dans des dalles en béton pour supporter des rails d'une voie de chemin de fer. En particulier, ceci est utilisé lors de la réalisation de voies de chemin de fer sans ballaste ou sans traverse. Par exemple, de tels procédés d'insertion sont décrits dans les demandes de brevet EP 0 803 609 et EP 1 178 153.

Le bras d'insertion doit être disposé au-dessus du sol avec une grande précision. Pour cela, il est connu de commander le déplacement du bras en fonction de relevés topographiques (voir EP 1 178 153).

Ces procédés donnent satisfaction. En particulier, ils permettent de positionner chaque élément avec une erreur absolue faible par rapport à la position nominale à laquelle cet élément aurait du être inséré. Par « erreur absolue de positionnement de l'élément $\underline{i}$ » on désigne ici la différence $D_{ai}$ entre la position de coordonnées $X_{mi}$, $Y_{mi}$, $Z_{mi}$ à laquelle l'élément $\underline{i}$ est réellement inséré dans le sol et la position nominale de coordonnées $X_{ni}$, $Y_{ni}$, $Z_{ni}$ établie pour cet élément. Les procédés existants permettent de maintenir l'erreur absolue dans une plage comprise entre, par exemple, +/- 1 mm. On dit alors que la précision absolue du procédé est de +/- 1 mm.

Avec une telle précision absolue, l'erreur relative $D_{ri}$ de positionnement entre l'élément $\underline{i}$ - 1 et l'élément $\underline{i}$ est comprise dans une plage qui est deux fois plus étendue que celle tolérée pour l'erreur absolue. Par erreur relative $D_{ri}$ de positionnement entre l'élément $\underline{i}$ -1 et l'élément $\underline{i}$ on désigne la différence entre l'erreur absolue $D_{ai}$ de positionnement de l'élément $\underline{i}$ et l'erreur absolue $D_{ai-1}$ de positionnement de l'élément $\underline{i}$ - 1.

Dans le cas de voies de chemin de fer, l'erreur absolue est bornée pour empêcher que les passagers d'un train puissent ressentir des vibrations gênantes. Les procédés existants permettent d'atteindre cet objectif.

Toutefois, dans les procédés existants, rien n'est fait pour réduire l'erreur relative de positionnement. Ainsi, dans un cas extrême, la situation suivante peut se rencontrer. L'élément $\underline{i}$ - 1 présente une erreur absolue de + 1 mm dans une direction et l'élément $\underline{i}$ présente une erreur absolue de - 1 mm dans la même direction. Ces deux erreurs absolues sont chacune dans la plage des erreurs absolues acceptables. Toutefois, dans ces conditions, l'erreur relative $D_{ri}$ est égale à 2 millimètres, ce qui peut être considéré comme inacceptable, car, par exemple, ceci peut provoquer des vibrations gênantes pour les passagers.

Il est donc souhaitable de réduire l'erreur relative.

L'invention vise à satisfaire ce souhait en proposant un procédé d'insertion d'éléments dans le sol permettant de réduire l'erreur relative de positionnement de ces éléments comportant les caractéristiques énoncées à la revendication 1.

L'invention a donc pour objet un procédé d'insertion d'un élément précédent puis d'un élément suivant dans le sol dans lequel le procédé comporte :

- une étape de détermination d'une erreur absolue de positionnement de l'élément précédent par rapport à la position nominale à laquelle l'élément précédent aurait du être inséré, et
- l'étape de guidage automatique du bras d'insertion vers une position cible à laquelle doit être inséré l'élément suivant est également réalisée en fonction de l'erreur absolue de positionnement déterminée pour l'élément précédent de manière à réduire l'erreur de positionnement relative de l'élément suivant par rapport à l'élément précédent.

Dans le procédé ci-dessus, le fait de tenir compte de l'erreur absolue de positionnement de l'élément précédent lors du guidage du bras d'insertion vers la position cible à laquelle doit être inséré l'élément suivant permet de réduire l'erreur relative de positionnement de cet élément suivant par rapport à l'élément précédent.

Les modes de réalisation de ce procédé peuvent comporter une ou plusieurs des caractéristiques suivantes :

- une étape de calcul de la position cible en ajoutant à au moins une coordonnée de la position nominale dans une direction donnée, la moitié de l'erreur absolue de positionnement de l'élément précédent dans la même direction ;
- une opération de mesure de la position à laquelle le bras d'insertion insère l'élément précédent dans le sol, cette mesure étant réalisée par une station de mesure positionnée sur une borne de relevés topographiques, et une opération de soustraction de la position mesurée à la position nominale établie pour l'élément précédent ;

- l'étape de guidage est également réalisée en fonction de mesures de la position du bras d'insertion réalisées :

   par une première station de mesure placée sur une première borne de relevés topographiques lorsque le bras se déplace le long d'une première section de la trajectoire théorique, et
   . par une seconde station de mesure placée sur une seconde borne de relevés topographiques distante de la première borne, lorsque le bras d'insertion se déplace le long d'une seconde section de la trajectoire théorique, et dans lequel le procédé comporte :
   . une étape d'estimation de l'écart dimensionnel entre les coordonnées de la position du bras d'insertion obtenues à partir des mesures de la première station et les coordonnées pour la même position du bras d'insertion obtenues à partir des mesures de la seconde station, et
   . lors de l'étape de guidage, le bras d'insertion est guidé vers la position cible également en fonction de cet écart estimé de manière à réduire l'erreur de positionnement relative de l'élément suivant par rapport à l'élément précédent lors du passage de la première section vers la seconde section ;

- l'écart estimé est utilisé pour guider le bras d'insertion au moins pour l'insertion des $n$ premiers éléments successifs le long de la seconde section, où $n$ est un nombre entier supérieur ou égal à dix ;
- une étape de calcul de la position cible des $n$ premiers éléments successifs de la seconde section en ajoutant à au moins l'une des coordonnées de la position nominale dans une direction donnée, l'écart estimé dans cette même direction divisé par $n$ ;
- les éléments insérés dans le sol sont des selles de voie de chemin de fer.

Ces modes de réalisation du procédé présentent en outre les avantages suivants :

- calculer la position cible en ajoutant aux coordonnées de la position nominale la moitié de l'erreur absolue de positionnement de l'élément précédent permet de minimiser l'erreur relative de positionnement,
- guider le bras d'insertion vers la position cible en fonction de l'écart estimé entre les mesures réalisées à l'aide des première et seconde stations de mesure permet, par exemple, de maintenir l'erreur relative de positionnement de l'élément suivant par rapport à l'élément précédent dans une plage acceptable lors du passage entre la première et la seconde sections de la trajectoire théorique,
- guider le bras d'insertion en fonction de l'écart estimé pour l'insertion des au moins dix premiers éléments successifs le long de la seconde section permet de faire un rattrapage progressif de cet écart estimé tout en maintenant les erreurs de positionnement dans une plage acceptable.

L'invention a également pour objet un support d'enregistrement d'informations comportant des instructions pour l'exécution du procédé ci-dessus lorsque ces instructions sont exécutées par un calculateur électronique.
L'invention a également pour objet un système d'insertion d'un élément précédent puis d'un élément suivant dans le sol le long d'une trajectoire théorique pour la réalisation d'un ouvrage, ce système comportant :

- un bras d'insertion guidé en déplacement, ce bras étant apte à insérer les éléments dans le sol,
- au moins une station de mesure positionnée sur une première borne de relevés topographiques, cette station étant propre à mesurer la position du bras d'insertion, et
- une unité de guidage des déplacements du bras d'insertion en fonction de relevés topographiques et de la trajectoire théorique.

Cette unité de guidage est apte à exécuter le procédé d'insertion ci-dessus.
L'invention sera mieux comprise à la lecture de la description qui va suivre, donnée uniquement à titre d'exemple non limitatif et faite en se référant aux dessins sur lesquels :

- la figure 1 est une illustration schématique en perspective d'un système d'insertion de selles pour la construction d'une voie de chemin de fer,
- la figure 2 est une illustration schématique d'une selle pouvant être insérée à l'aide du système de la figure 1,
- la figure 3 est une illustration schématique en vue de dessus du système de la figure 1, et
- la figure 4 est un organigramme d'un procédé d'insertion de selles à l'aide du système de la figure 1.

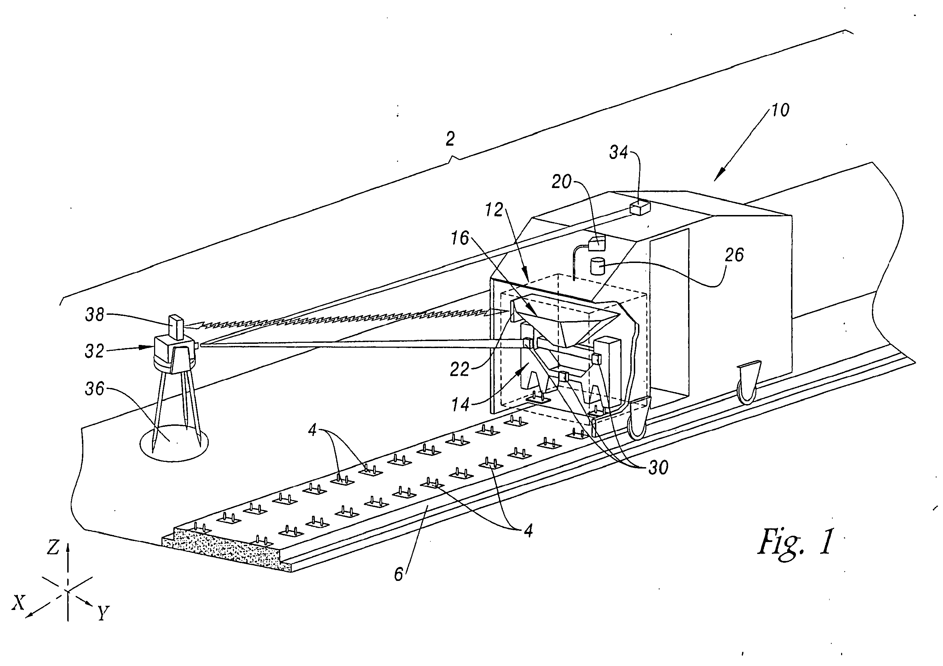

La figure 1 représente un système 2 d'insertion de selles 4 dans une dalle en béton 6.
Dans la suite de cette description, les caractéristiques et fonctions bien connues de l'homme du métier ne sont pas décrites en détail.

Le système 2 comprend un véhicule 10 de transport d'un dispositif commandable 12 d'insertion des selles 4.

Le véhicule 10 est monté sur quatre roues, dont deux sont directrices et les deux autres sont motrices permettant d'assurer un déplacement autonome de ce véhicule suivant une direction donnée. Le véhicule 10 comporte une face arrière sur laquelle est fixé, sans aucun degré de liberté, le dispositif 12.

Le dispositif 12 comprend un bras 14 d'insertion des selles et un mécanisme commandable 16 de positionnement du bras 14 par rapport à la surface supérieure de la dalle en béton 6.

Le bras 14 est apte à insérer simultanément deux selles 4 dans la dalle 6 lorsque celle-ci n'a pas encore durci. A cet effet, le bras 14 est apte à mettre en oeuvre le procédé d'insertion décrit dans la demande de brevet EP 0 803 609 consistant à faire vibrer la dalle 6 encore fraîche lors de l'insertion des selles.

Par exemple, le bras 14 a une forme générale en H et supporte sur sa partie inférieure deux vérins à l'extrémité desquels sont fixées deux selles 4 destinées à être insérées dans la dalle 6 fraîchement coulée. Le bras 14 est apte à maintenir les selles 4 à une distance l'une de l'autre qui correspond au gabarit de la voie de chemin de fer à installer. Le bras 14 comporte seulement un degré de liberté permettant de déplacer les selles 4 à fixer le long d'un axe Z. L'axe Z est ici défini comme étant perpendiculaire à la surface supérieure de la dalle 6. Un axe X parallèle à la direction de déplacement du véhicule 10 et un axe Y perpendiculaire aux axes X et Z ont également été représentés sur la figure 1. Ces axes X, Y, Z sont, par exemple, ,solidaires du véhicule 10 et définissent des directions orthogonales.

Le bras 14 est, par exemple, décrit plus en détail dans la demande de brevet EP 0 803 609.

Le mécanisme 16 est apte à déplacer le bras 14 avec six degrés de liberté à savoir trois degrés de liberté en rotation autour des axes X, Y et Z et trois degrés de liberté en translation autour des axes X, Y et Z.

Le véhicule 10 comprend également une unité de guidage 20 apte à guider le dispositif 12 en fonction de relevés topographiques et de mesures reçues par l'intermédiaire d'un récepteur 22.

L'unité 20 est également apte à commander le déplacement du véhicule 10.

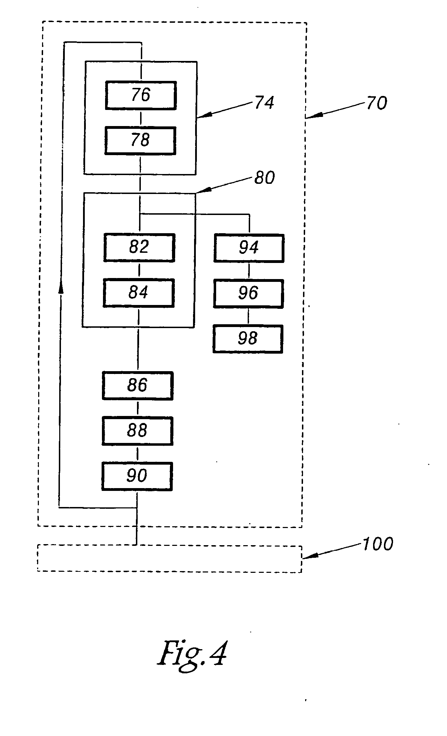

L'unité 20 est, par exemple, réalisée à l'aide d'un calculateur électronique programmable embarqué dans le véhicule 10 propre à exécuter le procédé de la figure 4. A cet effet, le calculateur est raccordé à un support d'enregistrement 26 contenant des instructions pour l'exécution du procédé de la figure 4 lorsque ces instructions sont exécutées par le calculateur.

Le bras 14 comporte sur sa face arrière des réflecteurs 30 aptes à coopérer avec une station de mesure 32 installée en bordure de la voie de chemin de fer à installer. Par exemple, trois réflecteurs 30 sont fixés sur le bras 14.

Un réflecteur 34 est également fixé au châssis du véhicule 10. Par exemple, ce réflecteur 34 est monté sur le toit du véhicule 10.

La station 32 est installée sur un trépied à la verticale d'une borne 36 de relevés topographiques. La position géographique de la borne 36 dans un référentiel lié à la terre a préalablement été mesurée et est connue de l'unité 20.

La station 32 comporte un dispositif laser de mesure de distances équipé d'une optique émettrice et d'une optique réceptrice permettant de connaître avec une très grande précision la distance et l'angle séparant la station 32 de l'ensemble des réflecteurs 30 et 34 portés respectivement par le bras 14 et le véhicule 10.

La station 32 est également équipée d'un émetteur radio 38 envoyant le résultat des mesures effectuées à chaque instant par le dispositif 32 en direction du récepteur 22 porté par le véhicule 10.

Plus de détails sur le guidage du bras 14 en fonction des relevés topographiques et des mesures de la station 32 sont donnés dans la demande de brevet EP 1 178 153.

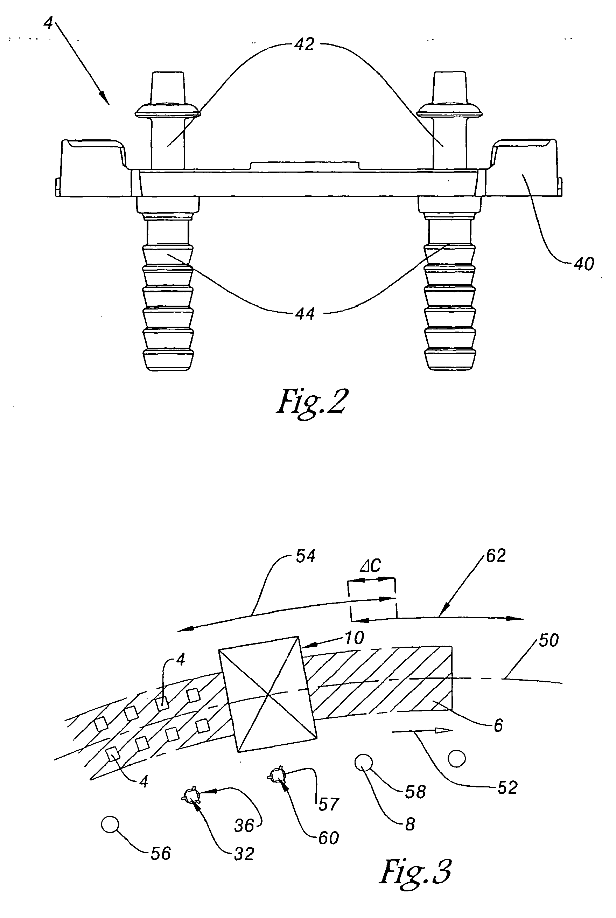

La figure 2 représente un exemple d'une selle 4 destinée à recevoir un rail et à transmettre l'effort exercé par un véhicule ferroviaire circulant sur ce rail à la dalle 6.

A cet effet, la selle 4 comprend un plaque 40 en matière rigide telle que de la fonte et deux ancrages 42 ayant chacun une tige filetée permettant de fixer un rail sur la selle 4 par des écrous. La selle 4 comporte également deux tiges 44 de scellement ayant une forme généralement cylindrique assurant la retenue dans la dalle 6 une fois que cette dalle a durcie.

La figure 3 représente le véhicule 10 lors de son déplacement le long d'une trajectoire théorique 50. La direction de déplacement du véhicule 10 le long de la trajectoire 50 est représentée par une flèche 52. Sur cette figure 3, les éléments déjà décrits en regard de la figure 1 portent les mêmes références numériques. Les coordonnées de la trajectoire 50 dans le référentiel lié à la terre sont, par exemple, enregistrées dans la mémoire 26.

Plus précisément, cette figure 3 représente une section 54 de la trajectoire 50 sur laquelle seules les mesures de la station 32 sont utilisées pour guider le bras d'insertion.

Etant donné que la portée de la station 32 est limitée, des bornes de relevés topographiques sont aménagées à intervalles réguliers le long de la trajectoire 50. Par exemple, les bornes de relevés topographiques sont aménagées le long de la trajectoire 50, tous les 50 à 100 mètres. Ici, seules trois bornes supplémentaires 56 à 58 sont représentées. La borne 57 est immédiatement en aval de la borne 36. L'aval est ici défini par rapport à la direction de déplacement du véhicule 10.

Le système 2 comprend également une seconde station 60 de mesure de la position du bras 14 positionnée sur la borne 57 de relevés topographiques Cette station 60 est, par exemple, identique à la station 32 et permet de mesurer la position du bras 14 lorsque le véhicule 10 se déplace sur une section 62 de la trajectoire 50.

Dans le système 2, les sections 54 et 62 se chevauchent partiellement sur un intervalle $\Delta C$.

Le fonctionnement du système 2 va maintenant être décrit en regard du procédé de la figure 4, dans le cas particulier où le véhicule 10 est initialement sur la section 54 de la trajectoire 50.

Le procédé débute par une phase 70 d'utilisation des seules mesures de la station 32 pour guider le bras d'insertion 14.

Plus précisément, lors d'une étape 74, l'unité 20 guide le bras 14 vers une position cible précalculée à laquelle doit être insérée une paire $i$ - 1 de selles en fonction des coordonnées $X_{ci-1}$, $Y_{ci-1}$, $Z_{ci-1}$. Les coordonnées $X_{ci-1}$, $Y_{ci-1}$, $Z_{ci-1}$ ont été calculées au préalable. Le calcul de ces coordonnées sera décrit ci-dessous dans le cas particulier des coordonnées $X_{ci}$, $Y_{ci}$ et $Z_{ci}$ de la position cible où doit être insérée la paire suivante $i$ de selles.

Lors de l'étape 74, l'unité 20 commande, lors d'une opération 76, le déplacement du véhicule 10 le long de la trajectoire 50 pour positionner le bras 14 à proximité de la position cible à laquelle doit être insérée la paire $i$ - 1 de selles. Typiquement, à l'issue de l'opération 76, le bras 14 est situé à +/- 1 cm de la position cible.

Une fois la position cible atteinte, lors d'une opération 78, l'unité 20 commande le mécanisme 16 pour positionner le bras 14 sur la position cible avec une précision supérieure. Typiquement, à l'issue de l'opération 78, le bras 14 est situé à +/- 1 mm de la position cible.

Une fois l'étape 74 achevée, lors d'une étape 80, l'unité 20 détermine l'erreur absolue de positionnement de la paire $i$ - 1 de selles par rapport à une position nominale à laquelle elle devait être insérée. Ici, la position nominale est représentée par les coordonnées $X_{ni-1}$, $Y_{ni-1}$ et $Z_{ni-1}$ de la position du bras d'insertion. L'établissement des coordonnées nominales est décrit plus en détail ci-dessous dans le cas particulier des coordonnées $X_{ni}$, $Y_{ni}$ et $Z_{ni}$ de la position nominale de la paire suivante $i$ de selles.

Plus précisément, lors de l'étape 80, la station 32 mesure, lors d'une opération 82, la position du bras 14 et transmet la position mesurée à l'unité 20.

Lors de l'opération 82, l'unité 20 acquiert les coordonnées $X_{mi-1}$, $Y_{mi-1}$ et $Z_{mi-1}$ de la position du bras 14 mesurée. Ces coordonnées sont, par exemple, exprimées dans un repère orthonormé dont les axes sont parallèles aux axes X, Y et Z et qui est fixe par rapport à la borne 36.

Ensuite, lors d'une opération 84, les coordonnées mesurées sont soustraites aux coordonnées $X_{ni-1}$, $Y_{ni-1}$, $Z_{ni-1}$ de la position nominale à laquelle la paire $i$ -1 de selles devrait être insérée en théorie. A l'issue de l'opération 84, l'erreur absolue $D_{ai-1}$ de positionnement de la paire $i$ - 1 de selles est obtenue.

Ensuite, lors d'une étape 86, la paire de selles $i$ - 1 est insérée dans la dalle 6 de béton frais en mettant, par exemple, en oeuvre le procédé décrit dans EP 0 803 609. Lors de l'étape 86, le bras 14 est maintenu dans la position mesurée lors de l'opération 82.

Une fois la paire $i$ - 1 de selles insérée, lors d'une étape 88, l'unité 20 établit les coordonnées $X_{ni}$, $Y_{ni}$ et $Z_{ni}$ de la position nominale à laquelle doit être insérée la paire $i$ de selles suivante. Par exemple, connaissant les coordonnées de la trajectoire 50 et un espacement prédéterminé entre deux paires de selles successives le long de cette trajectoire, l'unité 20 peut calculer les coordonnées $X_{ni}$, $Y_{ni}$ et $Z_{ni}$ de la position nominale à laquelle doit être insérée, en théorie, la paire $i$ de selles. Pour que ces coordonnées soient exploitables par l'unité 20 lors du guidage du bras d'insertion, celles-ci doivent être comparées aux coordonnées de la position actuelle du véhicule. Cette comparaison ne peut être réalisée que si les coordonnées actuelles du bras ou du véhicule et les coordonnées nominales sont comparées dans un repère commun. Pour exprimer ces différentes coordonnées dans un repère commun, les relevés topographiques de la borne 36 et les mesures de la station 32 sont utilisés. Par exemple, ici, le repère commun est le repère orthonormé dont les directions sont colinéaires aux axes X, Y et Z précédemment définis et dont l'origine est fixe par rapport à la borne de relevés topographiques 36. Dès lors, en utilisant les relevés topographiques de la borne 36, les coordonnées $X_{ni}$, $Y_{ni}$ et $Z_{ni}$ sont exprimées dans ce repère commun. Le repère commun est, par exemple, également utilisé pour exprimer les coordonnées $X_{ci}$, $Y_{ci}$ et $Z_{ci}$ ainsi que les coordonnées $X_{ni}$, $Y_{ni}$ et $Z_{ni}$.

Ensuite, lors d'une étape 90, l'unité 20 calcule les coordonnées $X_{ci}$, $Y_{ci}$ et $Z_{ci}$ de la position cible à laquelle doit être insérée la paire i de selles suivante. Ces coordonnées sont exprimées dans le repère commun. Lors de l'étape 90, la position cible est calculée en fonction de l'erreur absolue $D_{ai-1}$ déterminée lors de l'étape 80. Plus précisément, pour l'insertion des $n$ premières paires de selles de la section 54, les coordonnées $X_{ci}$, $Y_{ci}$ et $Z_{ci}$ sont, par exemple, calculées à l'aide des relations suivantes :

$$X_{ci} = X_{ni} + (D_{x,i-1}/2) + E_x/n$$
$$X_{ci} = Y_{ni} + (D_{y,i-1}/2) + E_y/n \qquad (1)$$
$$Z_{ci} = Z_{ni} + (D_{z,i-1}/2) + E_z/n$$

où:

- $D_{x,i-1}$, $D_{y,i-1}$ et $D_{z,i-1}$ sont les coordonnées de l'erreur absolue $D_{ai-1}$ déterminée lors de l'étape 80, respectivement selon les axes X, Y et Z du repère commun, et
- $E_x$, $E_y$ et $E_z$ sont les coordonnées, respectivement selon les axes X, Y et Z du repère commun, d'un écart de mesure E entre les mesures réalisées à partir de la station 32 et d'une station précédente placée sur la borne 56.

L'estimation des coordonnées $E_x$, $E_y$ et $E_z$ est décrite plus en détail ci-dessous dans le cas particulier de l'écart de mesures des stations 32 et 60.

Typiquement, $\underline{n}$ est un entier supérieur ou égal à dix.

Si lors de l'étape 90, la paire de selles suivante à insérer ne fait pas partie des $\underline{n}$ premières selles de la section, alors les coordonnées $X_{ci}$, $Y_{ci}$, et $Z_{ci}$ sont calculées à l'aide de la relation suivante :

$$X_{ci} = X_{ni} + (D_{x,i-1}/2)$$
$$X_{ci} = Y_{ni} + (D_{y,i-1}/2) \tag{2}$$
$$Z_{ci} = Z_{ni} + (D_{z,i-1}/2)$$

A l'issue de l'étape 90, le procédé retourne à l'étape 74 pour insérer la paire $\underline{i}$ de selles suivante.

Les étapes 74 à 90 sont réitérées en boucle tant que le bras 14 parcourt la section 54 de la trajectoire 50.

Toutefois, lorsque le bras 14 atteint l'intervalle de chevauchement $\Delta C$, en parallèle à l'étape 80, la station 60 mesure, lors d'une étape 94, la position du bras 14. L'étape 94 est de préférence réalisée simultanément à l'étape 82, de manière à réduire les erreurs de mesure de l'écart E.

Ensuite, la station 60 envoie les mesures réalisées à l'unité 20, lors d'une étape 96.

Lors d'une étape 98, l'unité 20 estime l'écart E entre les mesures réalisées par la station 32 et celles réalisées par la station 60. A cet effet, lors de l'étape 98, l'unité 20 établit la valeur des coordonnées $E_x$, $E_y$ et $E_z$ à partir de la différence entre les mesures réalisées lors des étapes 82 et 94 ainsi qu'en fonction des relevés topographiques des bornes 36 et 57. En effet, il a été observé que les coordonnées $X_{mi}$, $Y_{mi}$, $Z_{mi}$ obtenues à partir des mesures réalisées par la station 32 ne sont pas strictement identiques à celles obtenues à partir des mesures de la station 60. Cet écart dimensionnel E, peut alors conduire lors du passage de la section 54 à la section 62 à un dépassement des valeurs admissibles pour l'erreur relative. A l'issue de l'étape 98, les valeurs $E_x$, $E_y$ et $E_z$ sont stockées afin d'être utilisées lors de l'insertion des $\underline{n}$ premières paires de selles de la section 62.

Lorsque le bras 14 a parcouru la totalité de la section 54, alors la phase 70 s'achève et débute une nouvelle phase 100 d'utilisation des seules mesures de la station 60 pour guider le bras 14 lors du parcours de la section 62.

Au début de cette phase 100, les valeurs $E_x$, $E_y$ et $E_z$ utilisées lors du calcul des coordonnées de la position cible des $\underline{n}$ premières paires à insérer sont celles estimées lors de l'étape 98 de la précédente phase d'utilisation.

En parallèle à l'étape 100, par exemple, la station 32 est déplacée puis positionnée sur la borne 58 située immédiatement en aval de la borne 57. Dès lors, le procédé qui a été décrit dans le cas particulier des sections 54 et 62 est réitéré entre la section 62 et la section immédiatement en aval de celle-ci. Ainsi, les phases 70 et 100 sont réitérées tout le long du parcours de la trajectoire 50 par le véhicule 10.

De nombreux autres modes de réalisation sont possibles. Par exemple, les stations 32 et 60 sont adaptées, en variante, pour communiquer entre elles les mesures réalisées d'une même position du bras 14. A partir des mesures des stations 32 et 60, la station 32 et/ou la station 60 corrige ses propres mesures afin d'assurer un rattrapage progressif de l'écart E lors du passage de la section 54 à la section 62.

Le calcul de la position cible en fonction de l'erreur absolue de positionnement de la paire de selles précédente peut être mis en oeuvre sans jamais tenir compte de l'écart E. A l'inverse, l'enseignement décrit ici pour rattraper progressivement l'écart E peut être mis en oeuvre sans correction de la position cible en fonction de l'erreur absolue de positionnement de la paire de selles précédente.

D'autres repères communs peuvent être utilisés, par exemple, le repère commun peut être solidaire du véhicule 10.

Le procédé d'insertion décrit ici dans le cas particulier d'insertion de selles pour supporter des voies de chemin de fer peut être adapté pour insérer tout élément nécessaire à la réalisation d'un ouvrage.

**Revendications**

1. Procédé d'insertion d'un élément précédent puis d'un élément suivant dans le sol le long d'une trajectoire théorique (50) pour la réalisation d'un ouvrage à l'aide d'un bras d'insertion guidé en déplacement, ce procédé comportant :

   - une étape (88) d'établissement de positions nominales auxquelles les éléments doivent être insérés dans le sol en fonction de la trajectoire théorique,
   - une étape (74) de guidage automatique du bras d'insertion vers une position cible à laquelle doit être inséré l'élément suivant en fonction de la position nominale établie pour l'élément suivant et de relevés topographiques, **caractérisé en ce que** le procédé comporte :
   - une étape (80) de détermination d'une erreur absolue de positionnement de l'élément précédent par rapport à la position nominale à laquelle l'élément précédent aurait du être inséré, et **en ce que**
   - l'étape (74) de guidage automatique du bras d'insertion vers une position cible à laquelle doit être inséré l'élément suivant est également réalisée en fonction de l'erreur absolue de positionnement déterminée pour l'élément précédent de manière à réduire l'erreur de positionnement relative de l'élément suivant par rapport à l'élément précédent.

2. Procédé selon la revendication 1, dans lequel le procédé comporte une étape (90) de calcul de la position cible en ajoutant à au moins une coordonnée de la position nominale dans une direction donnée, la moitié de l'erreur absolue de positionnement de l'élément précédent dans la même direction.

3. Procédé selon la revendication 1 ou 2, dans lequel l'étape de détermination de l'erreur absolue de positionnement comporte :

   - une opération (82) de mesure de la position à laquelle le bras d'insertion insère l'élément précédent dans le sol, cette mesure étant réalisée par une station de mesure positionnée sur une borne de relevés topographiques, et
   - une opération (84) de soustraction de la position mesurée à la position nominale établie pour l'élément précédent.

4. Procédé selon l'une quelconque des revendications précédentes, dans lequel l'étape (74) de guidage est également réalisée en fonction de mesures de la position du bras d'insertion réalisées :

   - par une première station (32) de mesure placée sur une première borne (36) de relevés topographiques lorsque le bras se déplace le long d'une première section (54) de la trajectoire théorique, et
   - par une seconde station (60) de mesure placée sur une seconde borne (57) de relevés topographiques distante de la première borne, lorsque le bras d'insertion se déplace le long d'une seconde section (62) de la trajectoire théorique,

   et dans lequel le procédé comporte :

   - une étape (98) d'estimation de l'écart dimensionnel entre les coordonnées de la position du bras d'insertion obtenues à partir des mesures de la première station et les coordonnées pour la même position du bras d'insertion obtenues à partir des mesures de la seconde station, et
   - lors de l'étape (74) de guidage, le bras d'insertion est guidé vers la position cible également en fonction de cet écart estimé de manière à réduire l'erreur de positionnement relative de l'élément suivant par rapport à l'élément précédent lors du passage de la première section (54) vers la seconde section (62).

5. Procédé selon la revendication 4, dans lequel l'écart estimé est utilisé pour guider le bras d'insertion au moins pour l'insertion des n premiers éléments successifs le long de la seconde section (62), où n est un nombre entier supérieur ou égal à dix.

6. Procédé selon la revendication 5, dans lequel le procédé comporte une étape (90) de calcul de la position cible des n premiers éléments successifs de la seconde section (62) en ajoutant à au moins l'une des coordonnées de la position nominale dans une direction donnée, l'écart estimé dans cette même direction divisé par n.

7. Procédé selon l'une quelconque des revendications précédentes, **caractérisé en ce que** les éléments insérés dans le sol sont des selles de voie de chemin de fer.

8. Support (26) d'enregistrement d'informations, **caractérisé en ce qu'**il comporte toutes les instructions nécessaires pour l'exécution d'un procédé d'insertion conforme à l'une quelconque des revendications précédentes, lorsque ces instructions sont exécutées par un calculateur électronique.

9. Système d'insertion d'un élément précédent puis d'un élément suivant dans le sol le long d'une trajectoire théorique pour la réalisation d'un ouvrage, ce système comportant :

- un bras (14) d'insertion guidé en déplacement, ce bras étant apte à insérer les éléments dans le sol,
- au moins une station (32) de mesure positionnée sur une première borne (36) de relevés topographiques, cette station étant propre à mesurer la position du bras d'insertion,
- une unité (20) de guidage des déplacements du bras d'insertion en fonction de relevés topographiques et de la trajectoire théorique, comprenant un calculateur électronique, et

un support (26) d'enregistrement d'informations tel que défini dans la revendication 8.

10. Système selon la revendication 9, dans lequel le système comporte au moins une seconde station (60) de mesure positionnée sur une seconde borne (57) de relevés topographiques, cette seconde station étant apte à mesurer la position du bras d'insertion sur une portion de la trajectoire théorique où la position du bras d'insertion est également mesurable par la première station (32) de mesure, et dans lequel l'unité de guidage (20) est apte à exécuter un procédé d'insertion conforme à l'une quelconque des revendications 4 à 7.


**Claims**

1. A method of inserting a preceding element and then a following element in the ground along a theoretical path (50) in order to produce a work with the aid of an inserter arm guided in displacement, this method comprising:

- a step (88) for establishing nominal positions at which the elements are to be inserted in the ground depending on the theoretical path,
- a step (74) for automatically guiding the inserter arm towards a target position at which the following element is to be inserted depending on the nominal position established for the following element and topographical readings,

**characterised in that** the method comprises:

- a step (80) for determining an absolute positioning error of the following element relative to the nominal position at which the preceding element should have been inserted, and **in that**
- the step (74) for automatically guiding the inserting arm towards a target position at which the following element is to be inserted is also implemented depending on the absolute positioning error determined for the preceding error such as to reduce the relative positioning error of the following error relative to the preceding element.

2. The method according to Claim 1, wherein the method comprises a step (90) for calculating the target position by adding to at least one coordinate of the nominal position in a given direction, half of the absolute positioning error of the preceding element in the same direction.

3. The method according to Claim 1 or 2, wherein the step of determining the absolute positioning error comprises:

- an operation (82) for measuring the position at which the inserter arm inserts the preceding element in the ground, this measurement being taken by a measurement station positioned on a mark where the topographical readings are taken, and
- an operation (84) for subtracting the measured position from the nominal position established for the preceding element.

4. The method according to any of the preceding claims wherein the step (74) of guiding is also implemented depending on the measurements of the position of the inserter arm taken:

- by a first measurement station (32) placed on a first mark (36) where the topographical readings are taken when the arm is moving along a first section (54) of the theoretical path, and

- by a second measurement station (60) placed on a second mark (57) where the topographical readings are taken remote from the first mark when the inserter arm is moving along a second section (62) of the theoretical path,

and wherein the method comprises:

- a step (98) for estimating the dimensional difference between the coordinates of the position of the inserter arm obtained from the measurements of the first station and the coordinates for the same position of the inserter arm obtained from the measurements of the second station, and
- during the guiding step (74) the inserter arm is guided towards the target position also depending on this estimated difference such as to reduce the relative positioning error of the following element in relation to the preceding element while passing from the first section (54) towards the second section (62).

5. The method according to Claim 4, wherein the estimated difference is used to guide the inserter arm at least for the insertion of the $n$ first successive elements along the second section (62) where $n$ is an integer greater than or equal to ten.

6. The method according to Claim 5, wherein the method comprises a step (90) for calculating the target position of the $n$ first successive elements of the second section (62) by adding to at least one of the coordinates of the nominal position in a given direction the estimated difference in this same direction divided by $n$.

7. The method according to any of the preceding claims, **characterised in that** the elements inserted in the ground are railway track base plates.

8. A support (26) for recording information, **characterised in that** it comprises all of the instructions required for executing an insertion method in accordance with any of the preceding claims when these instructions are executed by an electronic calculator.

9. A system for inserting the preceding element and then a following element in the ground along a theoretical path in order to produce a work, this system comprising:

- an inserter arm (14) guided in displacement, this arm being suitable for inserting the elements in the ground,
- at least one measurement station (32) positioned on a first mark (36) where topographical readings are taken, this station being suitable for measuring the position of the inserter arm,
- a unit (20) for guiding the displacements of the inserter arm depending on topographical readings and the theoretical path, comprising an electronic calculator, and
- a support (26) for recording information as defined in Claim 8.

10. The system according to Claim 9, wherein the system comprises at least one second measurement station (60) positioned on a second mark (57) where topographical readings are taken, this second station being suitable for measuring the position of the inserter arm on a portion of the theoretical path where the position of the inserter arm can also be measured by the first measurement station (32) and wherein the guiding unit (20) is suitable for executing an insertion method in accordance with any of Claims 4 to 7.

**Patentansprüche**

1. Verfahren zum Einsetzen eines Elements, gefolgt von einem nachfolgenden Element, in den Boden entlang einer theoretischen Bahn (50) zur Realisierung eines Vorgangs mit Hilfe eines Führungs- und Verschiebungsarms, umfassend die folgenden Schritte:

- einen Schritt (88) der Bildung von Nominalpositionen, in denen die Elemente in den Boden eingesetzt werden sollen, als Funktion der theoretischen Bahn,
- einen Schritt (74) der automatischen Führung des Einsetzarms in eine Zielposition, in der das nachfolgende Element eingesetzt werden soll, als Funktion der für das vorhergehende Element gebildeten Nominalposition und topographischer Aufnahmen,

**gekennzeichnet durch** die folgenden Schritte:

- einen Schritt (80) der Bestimmung eines absoluten Fehlers der Positionierung des vorhergehenden Elements relativ zur Nominalposition, in der das vorhergehende Element eingesetzt werden sollte, und
- einen Schritt (74) der automatischen Führung des Einsetzarms in eine Zielposition, in der das nachfolgende Element eingesetzt werden soll, als Funktion des absoluten Fehlers der bestimmten Position für das vorhergehende Element zur Reduktion des relativen Positionierungsfehlers des nachfolgenden Elements bezüglich des vorhergehenden Elements.

2. Verfahren gemäß Anspruch 1, umfassend einen Schritt (90) der Berechnung der Zielposition durch Addition zu zumindest einer Koordinate der Nominalposition in einer gegebenen Richtung des Mittels des absoluten Positionierungsfehlers des vorhergehenden Elements in der gleichen Richtung.

3. Verfahren gemäß Anspruch 1 oder 2, in welchem der Schritt der Bestimmung des absoluten Positionierungsfehlers umfasst:

- eine Operation (82) der Messung der Position, in der der Einsetzarm das vorhergehende Element in den Boden einsetzt, welche Messung durch eine Messstation durchgeführt wird, die auf einer Markierung der topographischen Aufnahmen positioniert ist, und
- eine Operation (84) der Subtraktion der gemessenen Position von der Nominalposition, die von dem vorhergehenden Element eingenommen wird.

4. Verfahren gemäß einem der vorhergehenden Ansprüche, in welchem der Schritt (74) der Führung gleichermaßen als Funktion der Messungen der Position des Einsetzarms realisiert wird, durch:

- eine erste Messstation (32) auf einer ersten Markierung (36) der topographischen Aufnahmen, während der Arm sich entlang eines ersten Abschnitts (54) der theoretischen Bahn bewegt, und
- eine zweite Messstation (60) auf einer zweiten Markierung (57) der topographischen Aufnahmen, abweichend von der ersten Markierung, während der Einsetzarm sich entlang eines zweiten Abschnitts (62) der theoretischen Bahn bewegt,

wobei das Verfahren umfasst:

- einen Schritt (98) der Schätzung der räumlichen Abweichung zwischen den Koordinaten der Position des Einsetzarms, gemessen durch die erste Station, und den Koordinaten für die gleiche Position des Einsetzarms, gemessen durch die zweite Station, und
- während des Führungsschritts (74), das Führen des Einsetzarms zur Zielposition als Funktion dieser geschätzten Abweichung, zur Reduktion des relativen Positionierungsfehlers des nachfolgenden Elements bezüglich des vorhergehenden Elements während des Übergangs vom ersten Abschnitt (54) zum zweiten Abschnitt (62).

5. Verfahren gemäß Anspruch 4, in welchem die geschätzte Abweichung verwendet wird zum Führen des Einsetzarms zumindest zum Einsetzen von n ersten aufeinanderfolgenden Elementen entlang des zweiten Abschnitts (62), wo n eine ganze Zahl ist größer oder gleich zehn.

6. Verfahren gemäß Anspruch 5, umfassend einen Schritt (90) der Berechnung der Zielposition der n ersten aufeinanderfolgenden Elemente des zweiten Abschnitts (62) durch Addition von zumindest einer der Koordinaten der Nominalposition in einer vorgegebenen Richtung, wobei die geschätzte Abweichung in dieser gleichen Richtung durch n geteilt wird.

7. Verfahren gemäß einem der vorhergehenden Ansprüche, **dadurch gekennzeichnet, dass** die in den Boden eingesetzten Elemente Sättel von Eisenbahnschienen sind.

8. Datenträger (26), **dadurch gekennzeichnet, dass** er alle erforderlichen Anweisungen zur Ausführung eines Einsetzverfahrens nach einem der vorhergehenden Ansprüche trägt, welche Anweisungen durch einen elektronischen Rechner ausführbar sind.

9. System zum Einsetzen eines vorhergehenden Elements, gefolgt von einem nachfolgenden Element, in den Boden entlang einer theoretischen Bahn zur Realisierung eines Arbeitsprozesses, umfassend:

- einen Einsetz- und Verschiebungsarm (14), der zum Einsetzen von Elementen in den Boden vorgesehen ist,

- zumindest eine Messstation (32) auf einer ersten Markierung (36) für topographische Aufnahmen, welche Station zur Messung der Position des Einsetzarms vorgesehen ist,
- eine Einheit (20) zur Führung der Verschiebungen des Einsetzarms als Funktion der topographischen Aufnahmen und der theoretischen Bahn, umfassend eine elektronische Recheneinheit, und
- einen Datenträger (26) gemäß Anspruch 8.

10. System gemäß Anspruch 9, umfassend zumindest eine zweite Messstation (60), die auf einer zweiten Markierung (57) für topographische Aufnahmen angeordnet ist, welche zweite Messstation vorgesehen ist zur Messung der Position des Einsetzarms auf einem Bereich der theoretischen Bahn, in dem die Position des Einsetzarms gleichermaßen durch die erste Messstation (32) messbar ist, und in welchem die Führungseinheit (20) dazu vorgesehen ist, ein Verfahren zum Einsetzen gemäß einem der Ansprüche 4 bis 7 vorzunehmen.

*Fig. 1*

4

42

40

44

**Fig.2**

54

ΔC

62

50

4

10

6

4

52

58

56

36

32

57

60

8

**Fig.3**

*Fig.4*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0803609 A

- EP 1178153 A